# EUROPÄISCHE PATENTSCHRIFT

(11) **EP 1 002 674 B1**
(45) Veröffentlichungstag und Bekanntmachung des Hinweises auf die Patenterteilung: **09.06.2004**
(21) Anmeldenummer: 99121638.3
(22) Anmeldetag: 30.10.1999
(51) Int. Cl.: B60G 11/113, B60G 11/40, B60G 5/053, F16F 1/371, F16F 1/40, F16F 1/54

(54) **Verbindung zwischen Blattfederenden und Achslagern eines Doppelachsaggregates eines Lastkraftwagens**
Joint between the ends of a leaf spring and axle supports of a commercial vehicle tandem axle unit
Liaison entre les extrémités d'un ressort à lames et les supports d'essieu d'un ensemble d'essieux en tandem pour véhicules utilitaires

(30) Priorität: 20.11.1998 DE 19853540
(43) Veröffentlichungstag der Anmeldung: 24.05.2000
(73) Patentinhaber: MAN Nutzfahrzeuge Aktiengesellschaft, 80976 München (DE); WOCO AVS GmbH, 63628 Bad Soden-Salmünster (DE)
(72) Erfinder: Stummer, Josef, Dipl.-Ing., 80935 München (DE); Nagy, Attila, Dipl.-Ing., 1078 Budapest (HU); Klüh, Alfred, Dipl.-Ing., 36381 Schlüchtern (DE); Rafas, Ludmilla, 1141 Budapest (HU)

(56) Entgegenhaltungen:
- EP-A- 0 416 310
- EP-A- 0 577 961
- DE-A- 4 233 106
- DE-C- 943 932
- GB-A- 835 010
- GB-A- 1 019 860
- GB-A- 1 020 136
- PATENT ABSTRACTS OF JAPAN vol. 1997, no. 07, 31. Juli 1997 (1997-07-31) & JP 09 058239 A (NISSAN DIESEL MOTOR CO LTD), 4. März 1997 (1997-03-04)

## Beschreibung

Die Erfindung betrifft gemäß den Oberbegriffen der Ansprüche 1 und 2 eine Verbindung zwischen Blattfederenden und Achslagern eines Doppelachsaggregates eines Lastkraftwagens, mit einem ein elastisches Element aufweisenden Federsattel, der einenendes entweder fest mit einem Oberteil des Achslagers oder mit einer Unterseite des Blattfederendes verbunden ist und andernendes entweder mit dem elastischen Element an einer Unterseite des Blattfederendes oder mit dem elastischen Element auf einem Oberteil des Achslagers anliegt.

Aus der DE 42 21 996 C2 ist eine gattungsgemässe Verbindungsanordnung zwischen den Blattfedern und Achslagern bei einem Doppelachsaggregat eines Nutzfahrzeuges, insbesondere eines Lastkraftwagens bekannt, die mit einem elastischen Federsattel ausgestattet ist, der in der Flächenerstreckung größer als in der Tiefenerstreckung ausgebildete, elastische Elemente aufweist. Der Federsattel ist dabei entweder über ein separates Einfassteil auf dem Oberteil des Achslagern befestigt und weiterhin aus einer Grundplatte mit einem darauf vulkanisierten, elastischen Element, einem darauf vulkanisierten, schalenförmigen Einfassteil und einem auf diesem fest angeordneten, gewölbten Abrollkörper bestehend, oder über ein ihm integriertes, schalenförmiges Einfassteil an der Unterseite eines Federendes befestigt und aus dem schalenförmigen Einfassteil mit einem darauf vulkanisierten, elastischen Element, einem darauf vulkanisierten schalenförmigen Einfassteil und einem auf diesem fest angeordneten, gewölbten Abrollkörper bestehend. Hiermit ist eine wartungsfreie und verschleißarme Verbindung zwischen Pendelfeder und Achse bei Doppelachsaggregaten erreicht, die durch das bloße Aufliegen der Gummigleitfläche des elastischen Elementes entweder an der Blattfeder oder an dem Oberteil des Achslagers wegen Montagevereinfachung und geringstmöglichem Platzbedarf eine deutliche Komfortverbesserung am Doppelachsaggregat erzielen kann.

Aus der DE 42 33 106 A1 ist ein zwischen Radachse und Blattfeder eines Fahrzeuges angeordneter Federkörper bekannt, der zur Aufnahme eines die Blattfeder fixierenden Verbindungsorgans (Stahlseil) ein Durchgangsloch aufweist.

Aus der JP 09 058 239 A ist ein Anschlagpuffer für eine Fahrzeugfeder bekannt.

Es ist Aufgabe der Erfindung, die zwischen Blattfederenden und Achslagern eines Doppelachsaggregates eines Lastkraftwagens auftretenden Relativbewegungen vorwiegend durch eine elastische Verformung eines zwischen diesen angeordneten, elastischen Elementes aufzunehmen.

Diese Aufgabe ist erfindungsgemäß entsprechend den Merkmalen des Anspruches 1 durch eine Verbindungsanordnung gelöst, die sich dadurch kennzeichnet, dass der oberste Abschnitt des elastischen Elementes eine Horizontalerstreckung aufweist, die einen darunter befindlichen übrigen Bestandteil des elastischen Elementes in horizontaler Richtung in wesentlichem Maße überkragt und oberseitig eine etwa horizontal verlaufende Anlagefläche aufweist, die wenigstens bereichsweise mit einem Elastomer wesentlich erhöhter Reibfestigkeit ausgestattet ist.

Außerdem ist diese Aufgabe erfindungsgemäß entsprechend den Merkmalen des unabhängigen Anspruches 2 durch eine Verbindungsanordnung gelöst, die sich dadurch kennzeichnet, dass der unterste Abschnitt des elastischen Elementes eine Horizontalerstreckung aufweist, die einen darüber befindlichen übrigen Bestandteil des elastischen Elementes in horizontaler Richtung in wesentlichem Maße überkragt und unterseitig eine etwa horizontal verlaufende Anlagefläche aufweist, die wenigstens bereichsweise mit einem Elastomer hoher Reibfestigkeit ausgestattet ist.

Durch die erfindungsgemäße Lösung ist eine Verbindung zwischen Blattfederenden und Achslagern eines Doppelachsaggregates eines Lastkraftwagens gegeben, die sämtliche zwischen Blattfederenden und Achslagern entstehenden statischen und dynamischen Kräfte infolge des Fahrzeugeigengewichtes, der Zuladung und der Fahrbahnanregung nahezu vollständig elastisch aufnehmen kann. Zur Verbesserung der Montage ist ein ein elastisches Element aufweisender Fahrzeugsattel nur einseitig entweder mit dem Achslager oder mit dem Blattfederende des Doppelachsaggregates starr verschraubt. An dem Achslager angelenkte Längslenker sind hierbei als Pendelstützen ausgeführt und schwenken um einen mit dem Fahrzeugrahmen verbundenen ersten Drehpunkt der Achse. Des weiteren sind an der Achse angelenkte Querlenker in einem zweiten Drehpunkt der Achse gelagert und bewirken, dass die Achse quer zur Fahrtrichtung pendeln kann. Die bei den verschiedenen möglichen Bewegungen des Doppelachsaggregates zwischen Achse und Blattfeder entstehenden Relativbewegungen, welche durch die unterschiedlichen Drehpunkte und Abrollradien von Achse und Blattfeder bedingt sind, können über elastische Verformung vom elastischen Element des Federsattels aufgenommen sein. Gegebenenfalls auftretende Relativbewegungen zwischen Achse und Blattfeder, welche im Falle zu geringer Normalkraft nicht über das Elastomer aufnehmbar sind, können in Form von Abriebbeanspruchung zwischen der nicht verschraubten Seite des elastischen Elementes und der hieran anliegenden Metalloberfläche des Blattfederendes oder des Achslagers aufgenommen sein. Die Oberfläche der nicht verschraubten Seite des elastischen Elementes ist entweder aus einem Elastomer oder einem ähnlichen Werkstoff bestehend, um den durch Abrieb verursachten Verschleiß der angrenzenden Metallteile sowie die Geräuschentwicklung beim Springen der Achse zu vermindern bzw. zu vermeiden. Der oberste Abschnitt des elastischen Elementes besteht aus einem extrem abriebbeständigen Elastomer und weist ein möglichst geringes Setzverhalten auf. Des weiteren ist das elastische Element zur Vermeidung von Überbeanspruchungen durch in Horizontalrichtung wirksame Endanschläge geschützt. Um die Funktion des elastischen Elementes zu gewährleisten, sind dessen Freiwege bis zum Erreichen seiner Endanschläge durch entsprechende Ausgestaltung des Federsattels vor Verschmutzung geschützt.

Die erfindungsgemäße Verbindungsanordnung zwischen Blattfederenden und Achslagern zeichnet sich demnach dadurch aus, daß das an der Oberfläche seiner Anlagefläche zumindest teilweise gummierte, elastische Element den pendelnden Bewegungen der Blattfeder weitestgehend folgt, ohne daß eine Relativbewegung zwischen den über Reibschluß verbundenen Oberflächen der jeweils beteiligten, aufeinanderliegenden Bauteile entsteht. Dies wird erreicht, indem der Angriffspunkt der Kraft F vom Blattfederende her infolge der Pendelbewegungen von Achse und Blattfeder von der Mitte des Oberteiles des Achslagers an dessen Außenkante wandert, welche um einen bestimmten Betrag über das elastische Element hinauskragt. Hierdurch wird am elastischen Element ein Moment erzeugt, welches bewirkt, daß das Oberteil der Blattfeder bei ausreichend hoher Reibkraft zwischen den beiden Bauteilen und entsprechend kleiner Schubfederrate des elastischen Elementes ohne Entstehen einer Relativbewegung folgt.

Je nach Anforderung kann das elastische Element als einschichtige oder mehrschichtige Feder ausgeführt und durch ein extrem abriebfestes Element gegeben sein. Dieses kann gegebenenfalls für das gesamte elastische Element vorgesehen sein. Damit das elastische Element den Bewegungen, welche über das Oberteil des Achslagers eingeleitet werden, möglichst ohne ein großes Gegenmoment auszuüben, folgt und im elastischen Element eine möglichst gleichmäßige Dehnungsverteilung herrscht, sind die das elastische Element unterteilenden und hierin einvulkahisierten Zwischenbleche als Segmente zueinander konzentrischer Kreise ausgebildet, deren gemeinsamer Radiusmittelpunkt auf einen Drehpol der Relativbewegung zwischen Achse und Blattfeder gelegt ist. Damit bei Extremauslenkungen des obersten Abschnittes des elastischen Elementes keine Überlastung im gesamten elastischen Elementes entsteht, werden die Bewegungen des elastischen Elementes in und quer zur Fahrtrichtung durch in dessen Horizontalrichtungen wirksame Anschläge begrenzt. Diese sind so gestaltet, daß entstehender Schmutz dort ausgegrenzt bleibt oder sich durch bei stochastischen Fahrbahnanregungen entstehenden Erschütterungen wieder entfernen kann. Bei extremer Schmutzbelastung, beispielsweise bei Baustellenfahrzeugen, können die Anschläge für das elastische Element im Inneren desselben angeordnet sein.

Alternativ hierzu können die das elastische Element unterteilenden, einvulkanisierten Zwischenbleche eine Kontur zueinander nicht konzentrisch angeordneter Kreissegmente aufweisen, die kein gemeinsames Radienzentrum aufweisen. Die Größe der Radien und die Lage des Radienzentrums der jeweiligen Kreissegmente wird durch die geometrischen Verhältnisse, welche für die Art der Relativbewegung zwischen Achse und Blattfeder entsteht, bestimmt. Ziel der Gestaltung und der Anordnung der Kreissegmente ist es, stets eine Minimierung der infolge der Relativbewegungen im Elastomer bestehenden Spannungen zu erreichen.

Durch die erfindungsgemäße Lösung ist eine geräuscharme, montagefreudliche und verschleißarme Verbindung zwischen Blattfederenden und Achslagern eines Doppelachsaggregates eines Lastkraftwagens gegeben.

Die weitere Ausgestaltung der Erfindung ist den übrigen Unteransprüchen zu entnehmen.

Nachstehend sind die erfindungsgemäßen Lösungen an Hand mehrerer in der Zeichnung dargestellter Ausführungsbeispiele noch näher erläutert.

In der Zeichnung zeigen:
- Fig. 1: Ein komplettes Doppelachsaggregat einer ersten Ausführungsart gemäß Anspruch 1 im Teilschnitt,
- Fig. 2: ein komplettes Doppelachsaggregat mit einer zweiten Ausführungsart gemäß Anspruch 2 im Teilschnitt,
- Fig. 3: in schematischer Vereinfachung ein Doppelachsaggregat eines Lastkraftwagens in Seitenansicht,
- Fig. 4: schematisch vereinfacht ein Doppelachsaggregat eines Lastkraftwagens im Schnitt IV-IV nach Fig. 3,
- Fig. 5: schematisch vereinfacht in Seitenansicht ein mit dem Achslager verbundener Federsattel mit aufliegendem, unbeanspruchtem Blattfederende, und mit einem zueinander konzentrische Zwischenbleche aufweisenden elastischen Element,
- Fig. 6: schematisch vereinfacht in Seitenansicht ein Federsattel gemäß Fig. 5 mit einem zueinander nicht konzentrische Zwischenbleche aufweisenden, elastischen Element,
- Fig. 7: gemäß Fig. 5 ein einfedernd beanspruchtes Blattfederende auf einem fest mit dem Achslager verbundenen Federsattel,
- Fig. 8: schematisch vereinfacht ein mit der Unterseite eines Blattfederendes fest verbundener, in Ruhestellung auf einem Achslager aufliegender Federsattel,
- Fig. 9: schematisch vereinfacht gemäß Fig. 7 ein an der Unterseite des Blattfederendes befestigter, in Betriebsstellung auf einem Achslager aufliegender Federsattel,
- Fig. 10: in einer Schnittdarstellung quer zur Fahrtrichtung je Zeichnungshälfte eine hälftig dargestellte Variante eines von Zwischenblechen unterteilten elastischen Elementes,
- Fig. 11: schematisch vereinfacht ein auf dem Achslager befestigter Federsattel in Schnittdarstellung quer zur Fahrtrichtung,
- Fig. 12: eine weitere Variante eines Federsattels in Schnittdarstellung mit einem internen Anschlag quer zur Fahrtrichtung,
- Fig. 13: entsprechend Fig. 11 eine weitere Variante eines Federsattels mit internem Anschlag,
- Fig. 14: in perspektivischer Explosionsdarstellung ein Federsattel mit externem Aufschlag,
- Fig. 15: in Seitenanicht ein elastisches Element als Teil eines Federsattels,
- Fig. 16: in perspektivischer Explosionsdarstellung ein Grundkörper als Teil des Federsattels,
- Fig. 17: in Seitenansicht ein kompletter Federsattel,
- Fig. 18: in Seitenansicht ein elastisches Element eines Federsattels und
- Fig. 19: in Seitenansicht ein Grundkörper eines Federsattels.

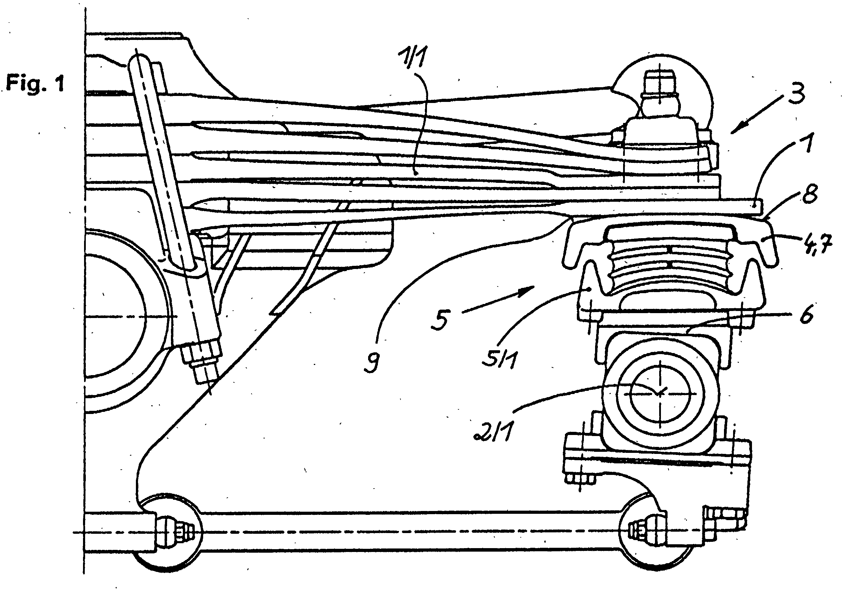

In Fig. 1 ist eine erste Ausführungsform einer Verbindungsanordnung zwischen Blattfederenden 1 und Achslagern 2 eines Doppelachsaggregates 3 eines Lastkraftwagens im Teilschnitt gezeigt. Diese Verbindung weist einen Federsattel 5 mit einem elastischen Element 4 auf. Der Federsattel 5 ist mit seiner Unterseite fest mit einem Oberteil 6 des Achslagers 2 verbunden und liegt mit seiner Oberseite eines obersten Abschnittes 7 des elastischen Elementes 4 an einer Unterseite 9 des Blattfederendes 1 an. Dabei überkragt der oberste Abschnitt 7 des elastischen Elementes 4 mit wesentlichem Überhang sämtliche Abschnitte des Elementes 4 in ihrer Horizontalerstreckung.

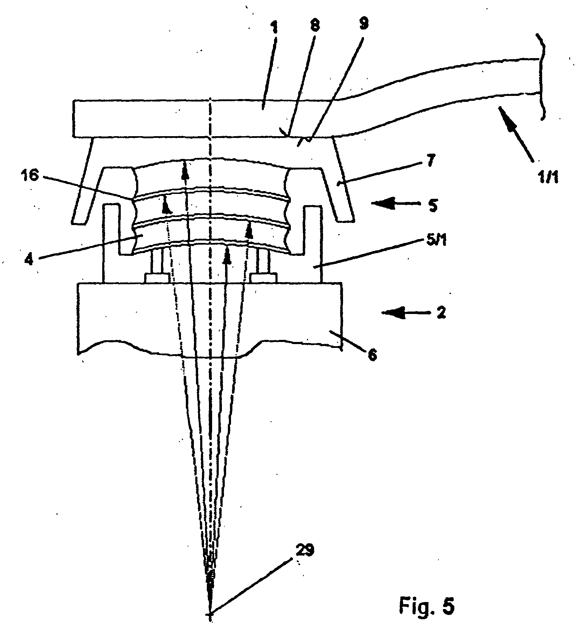

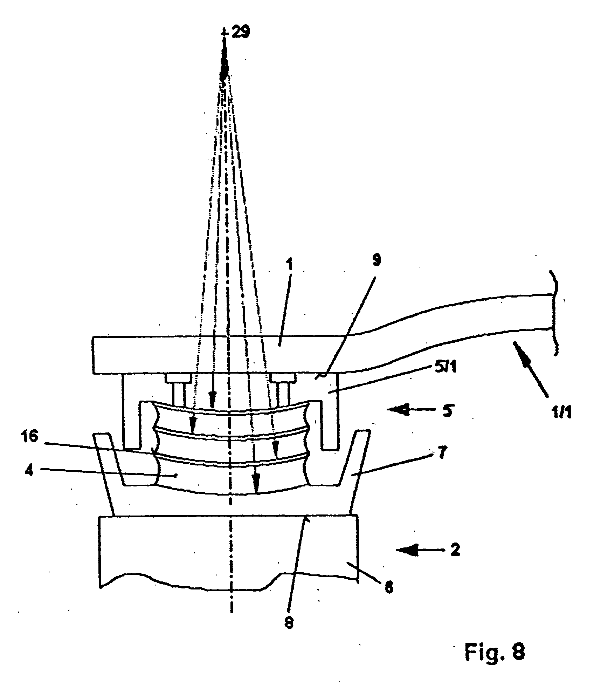

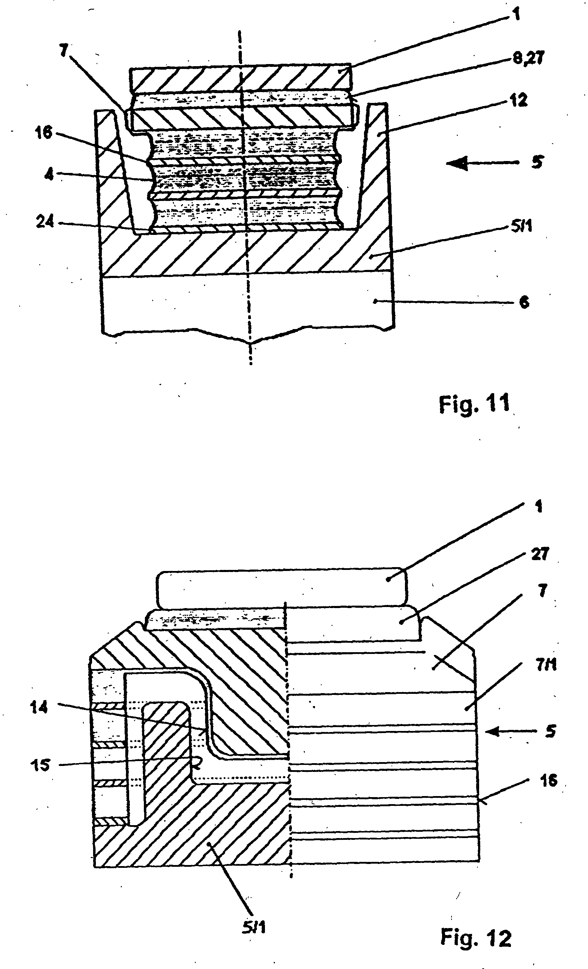

Des weiteren weist der oberste Abschnitt 7 des elastischen Elementes 4 oberseitig eine nahezu ebene, horizontale Anlagefläche 8 (Fig. 5) auf, die wenigstens bereichsweise mit einem Elastomer wesentlich erhöhter Reibfestigkeit ausgestattet ist. Dabei kann der gesamte oberste Abschnitt 7 des elastischen Elementes 4 durch dieses Elastomer gebildet sein (Fig. 5, Fig. 8). Gemäß einer alternativen Ausführung kann der oberste Abschnitt 7 eine an seiner Oberfläche gebildete, separate Elastomerschicht 27 (Fig. 11, 12, 13) aufweisen.

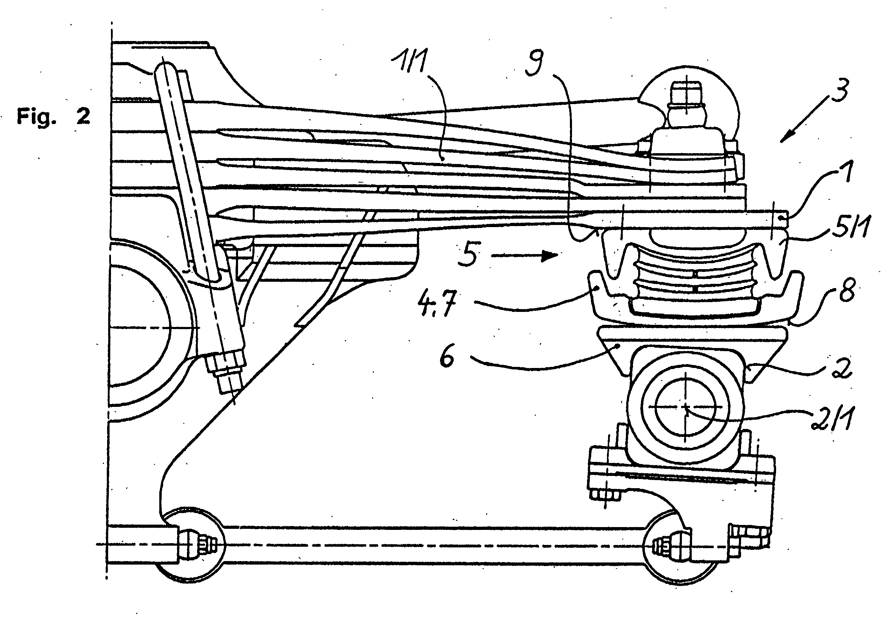

In Fig. 2 ist eine zweite Ausführungsart einer Verbindungsanordnung zwischen Blattfederenden 1 und Achslagern 2 eines Doppelachsaggregates 3 eines Lastkraftwagens im Teilschnitt gezeigt. Diese Verbindung weist einen Federsattel 5 mit einem elastischen Element 4 auf. Der Federsattel 5 ist mit seiner Oberseite fest mit einer Unterseite 9 des Blattfederendes 1 verbunden und liegt mit seiner Unterseite mit einem untersten Abschnitt 7 des elastischen Elementes 4 auf einem Oberteil 6 des Achslagers 2 auf. Hierbei überkragt der unterste Abschnitt 7 des elastischen Elementes 4 mit wesentlichem Überhang sämtliche Abschnitte des Elementes 4 in ihrer Horizontalerstreckung. Des weiteren weist der unterste Abschnitt 7 des elastischen Elementes 4 eine nahezu ebene, horizontale Anlagefläche 8 auf, die wenigstens bereichsweise mit einem Elastomer wesentlich erhöhter Reibfestigkeit ausgestattet ist. Die Anlagefläche 8 kann, wie in Fig. 2, 5, 6, 8 gezeigt, einteiliger Bestandteil des untersten Abschnittes 7 des elastischen Elementes 4 sein oder, wie in den Fig. 11, 12, 13 gezeigt, durch eine separate, von dem untersten Abschnitt 7 eingefaßte Elastomerschicht 27 gebildet sein.

Alternativ hierzu kann die Anlagefläche 8 durch hier nicht gezeigte partielle Elastomerbereiche gebildet sein, die entweder einteiliger Bestandteil des untersten Abschnittes 7 oder Bestandteil einer separaten, vom untersten Abschnitt 7 eingefaßten Elastomerschicht 27 sind.

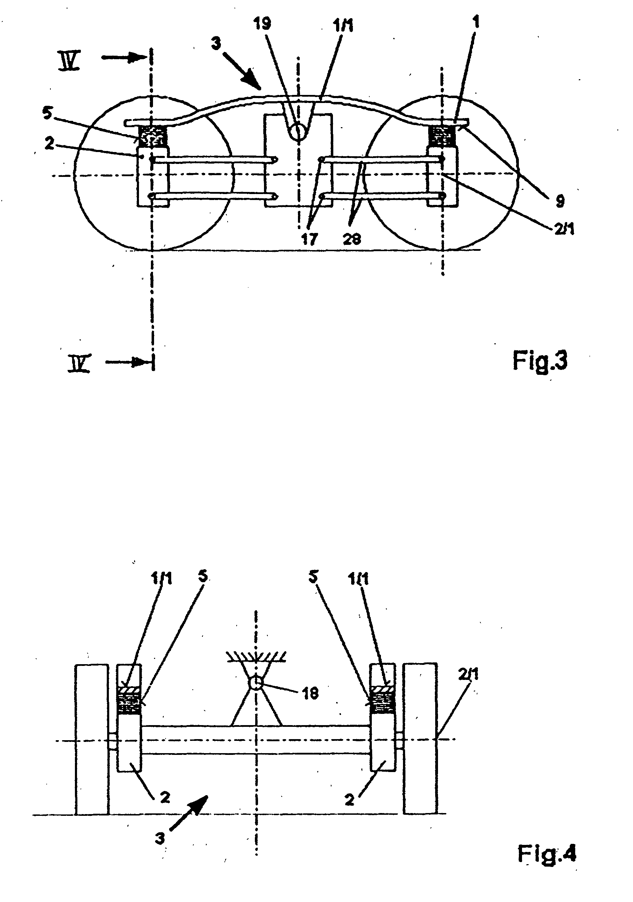

In Fig. 3 ist schematisch vereinfacht ein Doppelachsaggregat 3 eines Lastkraftwagens in Seitenansicht gezeigt Dabei sind die beiden Achsen 2/1 des Doppelachsaggregates 3 über oberseitig ihrer Achslager 2 befestigte Federsättel 5 an den jeweiligen Unterseiten 9 der Blattfederenden 1 abgestützt. Die Achsen 2/1 des Doppelachsaggregates 3 sind jeweils über hieran gelenkig angeordnete Längslenker 28 um erste Drehpole 17 in einer in Fahrtrichtung liegenden Horizontalebene schwenkbar. Die Blattfeder 1/1 ist ebenfalls in dieser Horizontalebene um einen rahmenfesten Drehpunkt 19 schwenkbar.

In Fig. 4 ist schematisch vereinfacht eine Vorderansicht eines Doppelachsaggregates 3 in einem Vertikalschnitt IV-IV gemäß Fig. 3 gezeigt. Dabei ist die Achse 2/1 in einer Ebene quer zur Fahrtrichtung um einen zweiten Drehpol 18 schwenkbar.

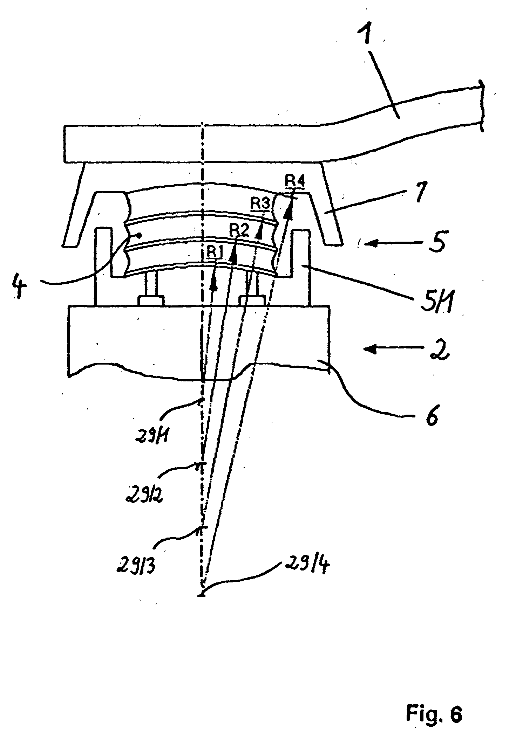

In Fig. 5 befindet sich die Blattfeder 1/1 in Ruheposition. Die Blattfeder 1/1 kann ein- oder mehrschichtig ausgeführt sein. Der in den Figuren 5 bis 8, 12, 16 gezeigte Federsattel 5 weist jeweils ein elastisches Element 4 auf, das durch einvulkanisierte Zwischenbleche 16 unterteilt ist. Das elastische Element 4 besteht, je nach Ausführungsvariante gemäß Fig. 1 bzw. Fig. 2, aus dem obersten bzw. untersten Abschnitt 7 und wenigstens einem sich hieran über das jeweilige Zwischenblech 16 anschließenden, zusätzlichen Abschnitt 7/1. Das elastische Element 4 kann beliebig weitere, zusätzliche Abschnitte 712, 7/3 usw. aufweisen (Figuren 12, 14 und 17). Die das elastische Element 4 unterteilenden, einvulkanisierten Zwischenbleche 16 können sowohl eine Kontur zueinander konzentrisch angeordneter Kreissegmente (Fig. 5) als auch eine Kontur zueinander nicht konzentrischer Kreissegmente (Fig. 6) aufweisen. Die in Fig. 5 dargestellten, konzentrisch angeordneten Kreissegmente der Zwischenbleche 16 weisen ein gemeinsames Radienzentrum auf, das in einem gemeinsamen Drehpol 29 (Fig. 8) der Relativbewegungen in einer Horizontalebene längs der Fahrtrichtung zwischen Blattfeder 1/1 und Achse 2/1 liegt.

Die in Fig. 6 gezeigten nicht konzentrisch angeordneten Kreissegmente der Zwischenbleche 16 weisen unterschiedliche Radienzentren 29/1, 29/2, 29/3, 29/4 auf. Die Größe der Radien R1, R2, R3, R4 und die Lage ihrer Radienzentren 29/1, 29/2, 29/3, 29/4 wird durch die geometrischen Verhältnisse, welche für die Art der Relativbewegung zwischen Achse 2/1 und Blattfeder 1/1 entsteht, bestimmt. Generelles Ziel der Gestaltung und der Anordnung der Kreissegmente der Zwischenbleche 16 ist es, stets eine Minimierung der infolge der Relativbewegungen im Elastomer entstehenden Spannungen zu erreichen.

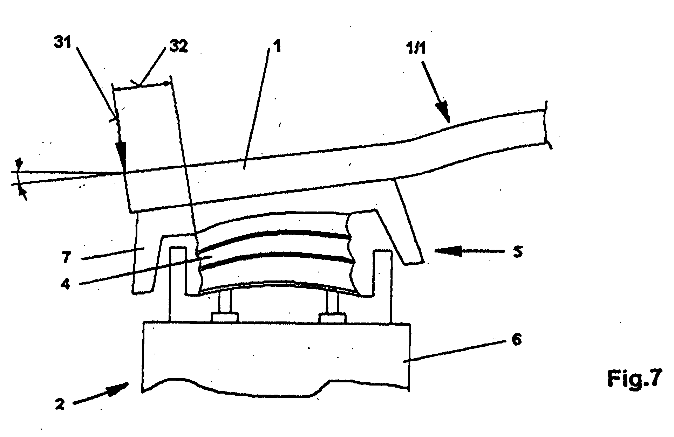

In Fig. 7 ist die Blattfeder 1/1 im eingefederten Zustand dargestellt. Aufgrund der in Fig. 3 und Fig. 4 vorgenannt beschriebenen Drehbewegungen einerseits der Achse 2/1 um den ersten und zweiten Drehpunkt 17, 18 sowie andererseits der Blattfeder 1/1 um den rahmenfesten dritten Drehpunkt 19 ergeben sich jeweils spezifische Drehpole 29, 30 für die Relativbewegungen zwischen der Blattfeder 1/1 und der Achse 2/1. So ergibt sich aus den Relativbewegungen der Drehbewegung der Blattfeder 1/1 um den Drehpunkt 19 und der Drehbewegung der Achse 2/1 um den Drehpunkt 17 der gemeinsame Drehpol 29. Analog hierzu ergibt sich aus den Relativbewegungen der Drehbewegung der Blattfeder 1/1 um den Drehpunkt 19 und der Drehbewegung der Achse 2/1 um den Drehpunkt 18 der gemeinsame Drehpol 30. Für die Drehbewegungen der Achse 2/1 um den ersten Drehpunkt 17 mittels der Längslenker 28 und für die Drehbewegungen der Blattfeder 1/1 um den dritten Drehpunkt 19 sind die sich ergebenden Relativbewegungen zwischen Achse 2/1 und Blattfeder 1/1 in Verbindung mit dem im deformierten Zustand dargestellten elastischen Element 4 dargestellt. Infolge der auf den Drehpol 29 bezogenen geometrischen Abstimmung der Kontur der Zwischenbleche 16 und der Überkragung des restlichen Elementes 4 durch dessen obersten bzw. untersten Abschnitt 7 kann das gesamte elastische Element 4 den pendelnden Bewegungen der Blattfeder 1/1 weitestgehend folgen, ohne daß eine Relativbewegung zwischen den über Reibschluß verbundenen Oberflächen 8, 9 des obersten Abschnittes 7 und der Unterseite 9 des Blattfederendes 1 entsteht.

Dieses wird dadurch erreicht, indem der Angriffspunkt einer infolge der Pendelbewegungen der Blattfeder 1/1 auftretenden Kraft 31 von zunächst der Mitte des obersten Abschnittes 7 zu dessen Außenkante hinwandert, welche um einen Überhang 32 über das restliche elastische Element 4 hinauskragt. Das aus dem Produkt der Länge des Überhanges 32 und der Kraft 31 resultierende Moment bewirkt, daß bei ausreichend hoher Reibkraft zwischen Blattfederende 1 und dem elastischen Element 4 und bei entsprechend kleiner Schubfederrate des elastischen Elementes 4 das Blattfederende 1 den Bewegungen des elastischen Elementes 4 ohne Entstehen einer Relativbewegung folgt. Damit das elastische Element 4 den Bewegungen, die über das Blattfederende 1 auf den obersten Abschnitt 7 eingeleitet werden, möglichst ohne ein großes Gegenmoment auszuüben, folgt und im gesamten elastischen Element 4 eine möglichst gleichmäßige Dehnungsverteilung herrscht, sind die Radien der Kreissegmente der Zwischenbleche 16 mit ihrem gemeinsamen Radienmittelpunkt exakt auf den momentanen Drehpol 30 der Relativbewegungen zwischen Achse 2/1 und Blattfeder 1/1 gelegt.

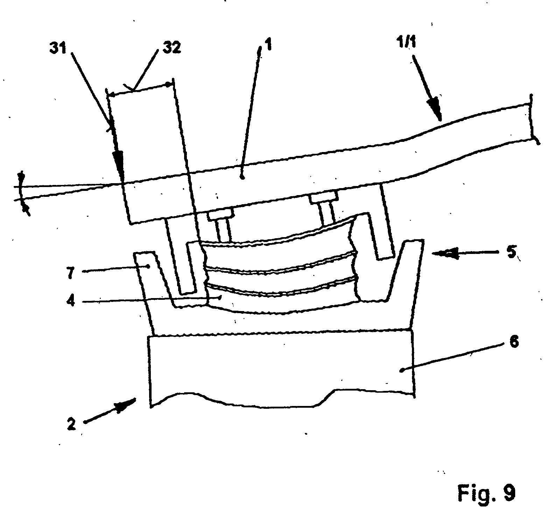

Die Fig. 8 und Fig. 9 zeigen analog zu der Fig. 5 und Fig. 7 einen zwischen Blattfederende 1 und Achslager 2 angeordneten Federsattel 5. Dieser ist zum Unterschied der in Fig. 5 und Fig. 7 gezeigten Ausführung mit seinem Grundkörper 5/1 fest mit der Unterseite des Blattfederendes 1 verbunden und liegt mit seinem untersten Abschnitt 7 seines elastischen Elementes 4 an einem Oberteil 6 des Achslagers 2 an. Hinsichtlich des Prinzips und der Wirkungsweise des hier gezeigten Federsattels gilt das vorgenannt Beschriebene.

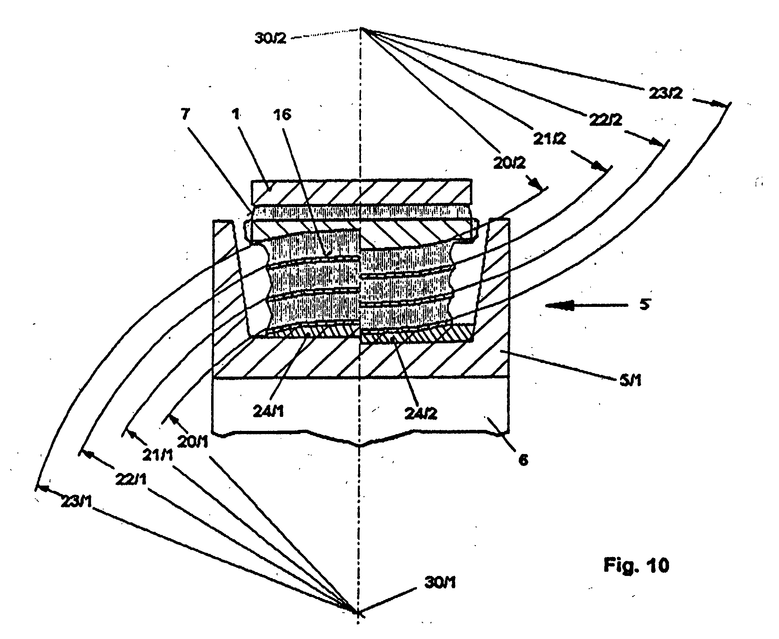

In Fig. 10 ist je Zeichnungshälfte eine Variante eines zwischen Blattfederende 1 und Oberteil 6 eines Achslagers 2 angeordneten Federsattels 5 gezeigt In der linken Zeichnungshälfte ist ein unterhalb des Federsattels 5 liegender unterer Drehpol 30/1 für die Relativbewegungen zwischen der Blattfeder 1/1 - um den Drehpunkt 19 drehend - und der Achse 2/1 - um den Drehpunkt 18 drehend - in einer Schnittdarstellung quer zur Fahrtrichtung dargestellt. In der rechten Zeichnungshälfte ist analog zur linken Zeichnungshälfte ein oberhalb des Federsattels 5 liegender oberer Drehpol 30/2 für die Relativbewegungen zwischen der Blattfeder 1/1 - um den Drehpunkt 19 drehend - und der Achse 2/1 - um den Drehpunkt 18 drehend - dargestellt.

Die das elastische Element 4 jeweils unterteilenden Zwischenbleche 16 weisen in der linken Zeichnungshälfte Konturen auf, die den auf den unteren Drehpol 30/1 bezogenen Kreisradien 20/1, 21/1, 22/1, 23/1 entsprechen. Alternativ hierzu weisen in der rechten Zeichnungshälfte die Zwischenbleche 16 Konturen auf, die dem Verlauf der der auf den oberen Drehpol 30/2 bezogenen Kreisradien 20/2, 21/2, 22/2, 23/2 folgen. Je nach Lage des unteren bzw. oberen Drehpols 30/1, 30/2 ergibt sich die Gestaltung eines zwischen Grundkörper 5/1 des Federsattels 5 und dem elastischen Element 4 befindlichen unteren bzw. oberen Einlegeteiles 24/1, 24/2.

In Fig. 11 ist ein zwischen Blattfederende 1 und Oberteil 6 eines Achslagers 2 angeordneter Federsattel 5 in Ruheposition dargestellt. Die Zwischenbleche 16 und das Einlegeteil 24 weisen hierbei eine eben gestaltete Kontur auf. Der Grundkörper 5/1 des Federsattels 5 ist zwecks Überlastungsschutz des elastischen Elementes 4 mit zu diesem beabstandeten, längs der Fahrtrichtung verlaufenden, äußeren Vertikalanschlägen 12 ausgestattet. An diesen ist das elastische Element 4 in Horizontalrichtung quer zur Fahrtrichtung abstützbar.

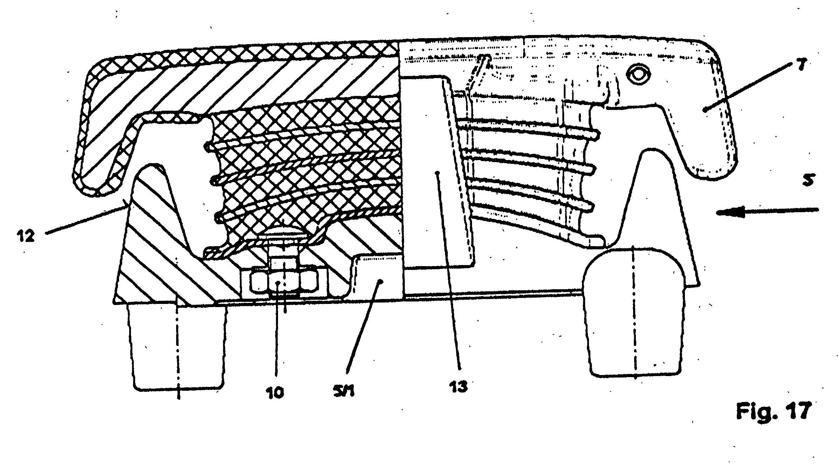

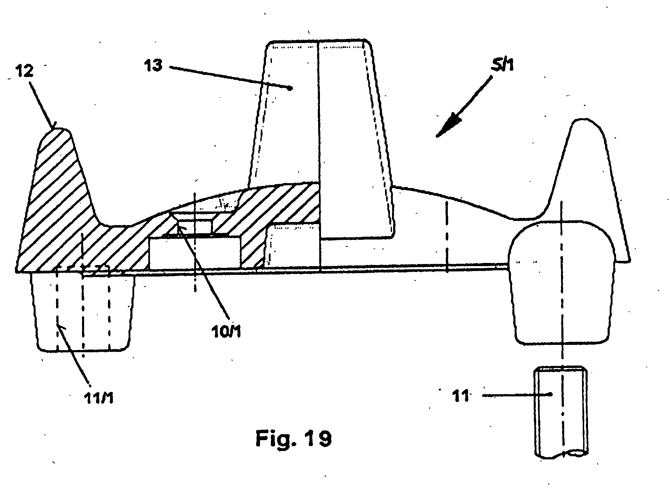

In Fig. 17 und Fig. 19 weist der Grundkörper 5/1 des Federsattels 5 zusätzlich zu den längsverlaufenden Vertikalanschlägen 12 quer zur Fahrtrichtung verlaufende Vertikalanschläge 13 auf.

In Fig. 12 weist der Grundkörper 5/1 des Federsattels 5 zwecks Überlastungsschutz des elastischen Elementes 4 zu innenseitig desselben vorgesehenen Anlageflächen 14 beabstandete innere Vertikalanschläge 15 auf. An diesen sind die Anlageflächen 14 des elastischen Elementes 4 in Horizontalrichtung quer zur Fahrtrichtung abstützbar. Alternativ hierzu können auch zusätzliche, in Fahrtrichtung wirkende Vertikalanschläge innerhalb des Federsattels 5 vorgesehen sein.

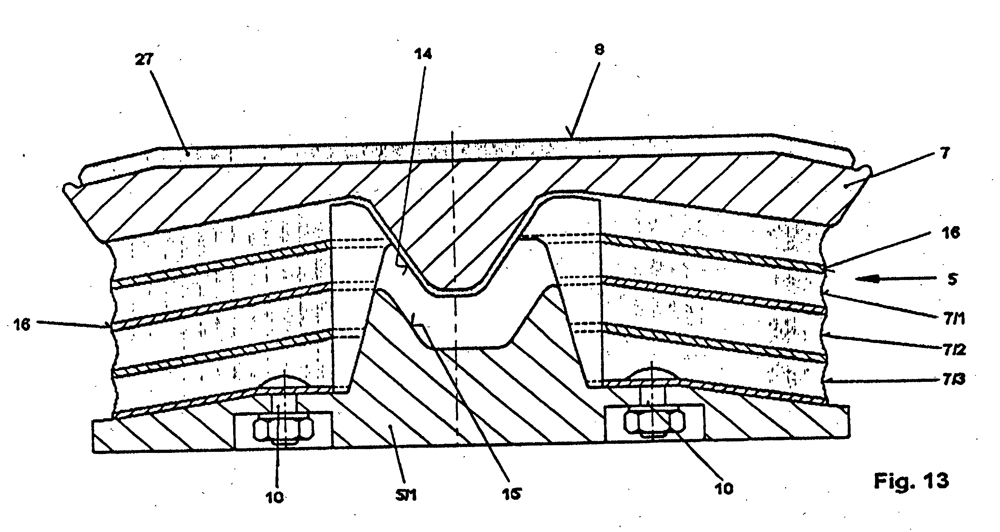

In Fig. 13 ist ein mit in Fahrtrichtung wirksamen inneren Anschlägen 15 ausgestatteter Grundkörper 5/1 eines Federsattels 5 gezeigt.

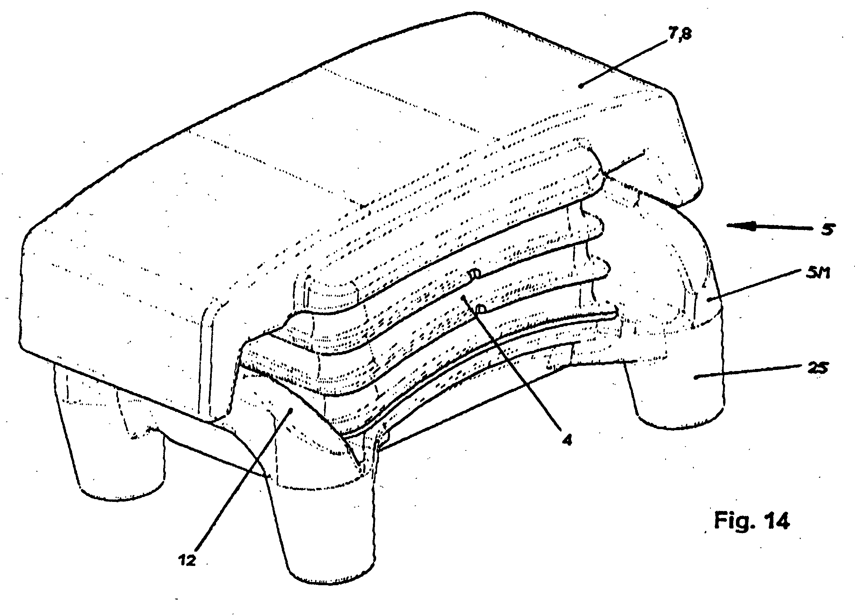

In Fig. 14 ist in perspektivischer Explosionsdarstellung ein ein elastisches Element 4 aufweisender Federsattel 5 mit in Fahrtrichtung wirksamen äußeren Anschlägen 12 gezeigt.

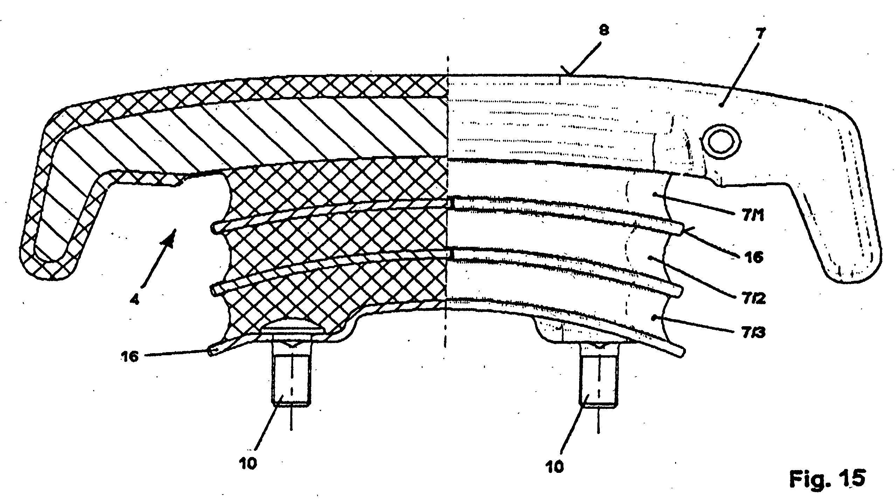

In Fig. 15 ist ein elastisches Element 4 gezeigt, das einen sämtliche darunter befindlichen Abschnitte 7/1, 7/2, 7/3 mit wesentlichem Überhang überkragenden obersten Abschnitt 7 aufweist. Der oberste Abschnitt 7 weist an seiner Oberfläche 8 ein durchgängig oder abschnittsweise vorgesehenes Elastomer erhöhter Reibfestigkeit auf. Dieses Elastomer kann gleichzeitig den obersten Abschnitt 7 sowie gleichermaßen die darunter befindlichen unteren Abschnitte 7/1, 7/2, 7/3 bilden. Das elastische Element 4 ist über Schraubverbindungen 10 mit dem Grundkörper 5/1 des Federsattels 5 verbunden. Diese Schraubverbindungen 10 können innerhalb von Bohrungen 10/1 aufgenommmen sein, die im untersten Zwischenblech 16 des elastischen Elementes 4 vorgesehen sind. Das unterste Zwischenblech 16 kann hierzu entsprechend blechdicker ausgeführt sein.

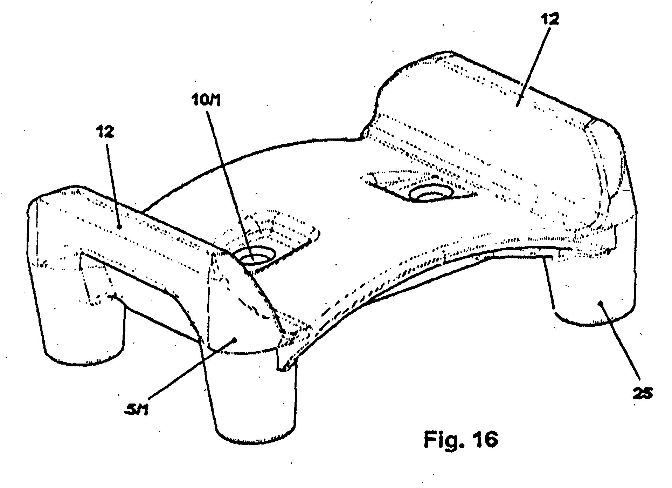

In Fig. 16 kann der Grundkörper 5/1 des Federsattels 5 auf der dem elastischen Element 4 abgewandten Seite entweder mit dem Oberteil 6 des Achslagers 2 oder mit Unterseite 9 des Blattfederendes 1 über Schraubverbindungen 11 fest verbunden sein. Der Grundkörper 5/1 kann zur Aufnahme dieser Schraubverbindungen 11 entsprechend gestaltete Sockel 25 mit Innengewinde 11/1 aufweisen (Fig. 19).

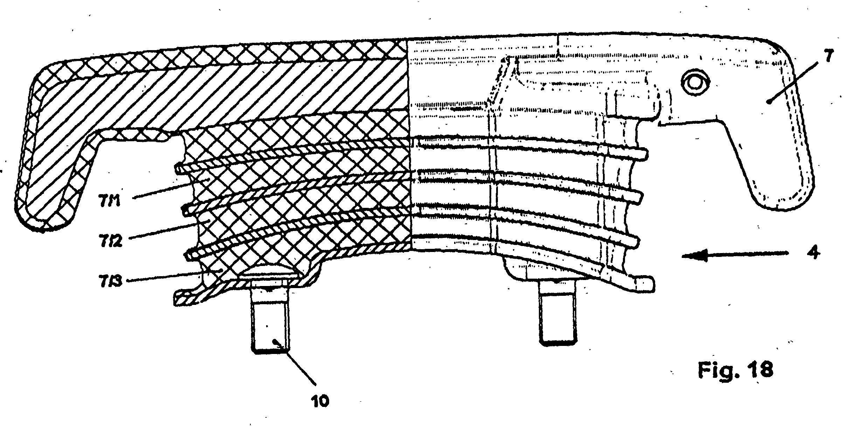

In den Fig. 17, 18, 19 ist in vereinfachter Weise in einem quer zur Fahrtrichtung verlaufenden Teilquerschnitt die Komplettierung eines Federsattels 5 dargestellt. Der Grundkörper 5/1 des Federsattels 5 weist hierbei längs und quer zur Fahrtrichtung verlaufende Vertikalanschläge 12, 13 zwecks Überlastungsschutz des elastischen Elementes 4 auf.

Unabhängig von der Ausgestaltung des Federsattels 5 kann das gesamte elastische Element 4 materialmäßig dasselbe Elastomer der Anlagefläche 8 des obersten bzw. untersten Abschnittes 7 aufweisen. Die das elastische Element 4 unterteilenden Zwischenbleche können in ihrer Horizontalerstreckung die zusätzlichen Abschnitte 7/1, 7/2, 7/3 usw. geringfügig überragen.

## Patentansprüche

1. Verbindungsanordnung zwischen Blattfederenden (1) und Achslagern (2) eines Doppelachsaggregates (3) eines Lastkraftwagens, mit einem ein elastisches Element (4) aufweisenden Federsattel (5), der unterseitig fest mit einem Oberteil (6) des Achslagers (2) verbunden ist und oberseitig mit einem obersten Abschnitt (7) des elastischen Elementes (4) an einer Unterseite (9) des Blattfederendes (1) anliegt, **dadurch gekennzeichnet, dass** der oberste Abschnitt (7) des elastischen Elementes (4) eine Horizontalerstreckung aufweist, die einen darunter befindlichen übrigen Bestandteil des elastischen Elementes (4) in horizontaler Richtung überkragt und oberseitig eine etwa horizontal verlaufende Anlagefläche (8) aufweist, die wenigstens bereichsweise mit einem Elastomer erhöhter Reibfestigkeit ausgestattet ist.

2. Verbindungsanordnung zwischen Blattfederenden (1) und Achslagern (2) eines Doppelachsaggregates (3) eines Lastkraftwagens, mit einem ein elastisches Element (4) aufweisenden Federsattel (5), der oberseitig fest mit einer Unterseite (9) des Blattfederendes (1) verbunden ist und unterseitig mit einem untersten Abschnitt (7) des elastischen Elementes (4) auf einem Oberteil (6) des Achslagers (2) aufliegt, **dadurch gekennzeichnet, dass** der unterste Abschnitt (7) des elastischen Elementes (4) eine Horizontalerstreckung aufweist, die einen darüber befindlichen übrigen Bestandteil des elastischen Elementes (4) in horizontaler Richtung in wesentlichem Maße überkragt und unterseitig eine etwa horizontal verlaufende Anlagefläche (8) aufweist, die wenigstens bereichsweise mit einem Elastomer erhöhter Reibfestigkeit ausgestattet ist.

3. Verbindungsanordnung nach einem der Ansprüche 1 und 2, **dadurch gekennzeichnet, daß** der Federsattel (5) einen Grundkörper (5/1) aufweist, der einenendes über Schraubverbindungen (10) mit dem elastischen Element (4) und anderenendes entweder mit dem .Oberteil (6) des Achslagers (2) oder mit der Unterseite (9) des Blattfederendes (1) über Schraubverbindungen (11) fest verbunden ist.

4. Verbindungsanordnung nach einem der vorangegangenen Ansprüche 1 bis 3, **dadurch gekennzeichnet, daß** der Grundkörper (5/1) des Federsattels (5) zwecks Überlastungsschutz des elastischen Elementes (4) zu diesem beabstandete, längs und/oder quer zur Fahrtrichtung verlaufende, äußere Vertikalanschläge (12, 13) aufweist, an diesen das elastische Element (4) in Horizontalrichtung abstützbar ist.

5. Verbindungsanordnung nach einem der vorangegangenen Ansprüche 1 bis 3, **dadurch gekennzeichnet, daß** der Grundkörper (5/1) des Federsattels (5) zwecks Überlastungsschutz des elastischen Elementes (4) zu innenseitig desselben vorgesehenen inneren Anlageflächen (14) beabstandete innere Vertikalanschläge (15) aufweist, an diesen die inneren Anlageflächen (14) des elastischen Elementes (4) in Horizontalrichtung abstützbar sind.

6. Verbindungsanordnung nach einem oder mehreren der vorangegangenen Ansprüche 1 bis 5, **dadurch gekennzeichnet, daß** das elastische Element (4) durch einvulkanisierte Zwischenbleche (16) unterteilt ist und insgesamt aus dem obersten bzw. untersten Abschnitt (7) und wenigstens einem sich hieran über das Zwischenblech (16) anschließenden, zusätzlichen Abschnitt (7/1) besteht.

7. Verbindungsanordnung nach Anspruch 6, **dadurch gekennzeichnet, daß** die das elastische Element (4) unterteilenden, einvulkanisierten Zwischenbleche (16) eine Kontur zueinander konzentrisch angeordneter Kreissegmente aufweisen, deren gemeinsames Radienzentrum in einem Drehpol (29) der Relativbewegungen in einer Ebene längs der Fahrtrichtung zwischen Blattfeder (1/1) und Achse (2/1) liegt.

8. Verbindungsanordnung nach einem oder mehreren der vorangegangenen Ansprüche 1 bis 7, **dadurch gekennzeichnet, daß** das gesamte elastische Element (4) aus demselben Material des Elastomers der Anlagefläche (8) des obersten bzw. untersten Abschnittes (7) besteht.

9. Verbindungsanordnung nach einem oder mehreren der vorangegangenen Ansprüche 1 bis 8, **dadurch gekennzeichnet, daß** die das elastische Element. (4) unterteilenden Zwischenbleche (16) die zusätzlichen Abschnitte (7/1, 7/2, 7/3) in Horizontalrichtung geringfügig überragen.

## Claims

1. Connection arrangement between leaf-spring ends (1) and axle bearings (2) of a tandem axle unit (3) of a truck with a spring pivot seat (5) which is provided with an elastic element (4) and whose underside is firmly connected with an upper part (6) of the axle bearing (2) and whose upper side with an uppermost section (7) of the elastic element (4) contacts an underside (9) of the leaf-spring end (1), **characterised in that** the uppermost section (7) of the elastic element (4) is provided with a horizontal extension which in horizontal direction overlaps a remaining part of the elastic element (4) located below said horizontal extension and on its upper side has an approximately horizontal contact face (8) which is, at least in some areas, provided with an elastomeric element of enhanced rubbing fastness.

2. Connection arrangement between leaf-spring ends (1) and axle bearings (2) of a tandem axle unit (3) of a truck with a spring pivot seat (5) which is provided with an elastic element (4) and whose upper side is firmly fastened to an underside (9) of the leaf-spring end (1) and whose underside with a lowermost section (7) of the elastic element (4) contacts an upper part (6) of the axle bearing (2), **characterised in that** the lowermost section (7) of the elastic element (4) has a horizontal extension which in horizontal direction overlaps to a large degree a remaining part of the elastic element (4) located above said horizontal extension and on its underside has an approximately horizontal contact face (8) which is, at least in some areas, provided with an elastomeric element of enhanced rubbing fastness.

3. Connection arrangement according to the Claims 1 and 2, **characterised in that** the spring pivot seat (5) has a base body (5/1) whose one end is firmly connected with the elastic element (4) via bolted connections (10) and whose other end is firmly connected either with the upper part (6) of the axle bearing (2) or with the underside (9) of the leaf-spring end (1) via bolted connections (11).

4. Connection arrangement according to one of the foregoing Claims 1 to 3, **characterised in that** for protecting the elastic element (4) against overloading the base body (5/1) of the spring pivot seat (5) is provided with external vertical stops (12, 13) which are arranged at a distance relative to said elastic element (4) and extend in longitudinal and/or transverse direction relative to the driving direction and on which the elastic element (4) can be supported in horizontal direction.

5. Connection arrangement according to one of the foregoing Claims 1 to 3, **characterised in that** for protecting the elastic element (4) against overloading the base body (5/1) of the spring pivot seat (5) is provided with inner vertical stops (15) which are arranged at a distance to inner contact faces (14) provided on the inside of said elastic element (4) and on which the inner contact faces (14) of the elastic element (4) can be supported in horizontal direction.

6. Connection arrangement according to one or several of the foregoing Claims 1 to 5, **characterised in that** the elastic element (4) is divided by intermediate plates (16) vulcanised into place and generally consists of the uppermost and the lowermost sections (7) and at least of one additional section (7/1) adjoining said section (7) via the intermediate plate (16).

7. Connection arrangement according to Claim 6, **characterised in that** the intermediate plates (16) vulcanised into place and dividing the elastic element (4) have a contour of circular segments which are concentrically arranged to one another and whose common centre of radii lies in a centre (29) of relative motions in one plane along the driving direction between the leaf spring (1/1) and the axle (2/1).

8. Connection arrangement according to one or several of the foregoing Claims 1 to 7, **characterised in that** the entire elastic element (4) is made of the same elastomeric material as the contact face (8) of the uppermost and lowermost sections (7).

9. Connection arrangement according to one or several of the foregoing Claims 1 to 8, **characterised in that** the intermediate plates (16) dividing the elastic element (4) slightly overlap the additional sections (7/1, 7/2, 7/3) in horizontal direction.

## Revendications

1. Disposition de raccordement entre des extrémités de ressorts à lames (1) et des paliers d'essieu (2) d'un essieu tandem d'un camion poids lourd, avec un étrier de ressort (5) présentant un élément élastique (4) et cet étrier est, sur sa face inférieure, relié fixement à un pièce supérieure (6) du palier d'essieu (2) et, sur sa face supérieure, est placé avec une section supérieure (7) de l'élément élastique (4) sur une face intérieure (9) de l'extrémité du ressort à lames (1), **caractérisée par le fait que** la section supérieure (7) de l'élément élastique (4) présente un allongement horizontal qui dépasse horizontalement de la partie restante se trouvant dessous de l'élément élastique (4) et, côté supérieur, présente une surface d'appui (8) s'étendant par exemple horizontalement, qui est dotée au minimum partiellement d'un élastomère hautement résistant au frottement.

2. Disposition de raccordement entre des extrémités de ressorts à lames (1) et des paliers d'essieu (2) d'un essieu tandem d'un camion poids lourd, avec un étrier de ressort (5) présentant un élément élastique (4) et cet étrier est, sur sa face supérieure, relié fixement à une face inférieure (9) de l'extrémité du ressort à lames (1) et, sur sa face inférieure, posé sur une pièce supérieure (6) du palier d'essieu (2) avec une section inférieure (7) de l'élément élastique (4), **caractérisée par le fait que** la section inférieure (7) de l'élément élastique (4) présente un allongement horizontal qui, pour l'essentiel, dépasse horizontalement de la partie restante se trouvant au-dessus de l'élément élastique (4) et, sur la face inférieure, présente une surface d'appui (8) s'étendant par exemple horizontalement, qui est dotée au minimum partiellement d'un élastomère hautement résistant au frottement.

3. Disposition de raccordement selon une des revendications 1 et 2, **caractérisée par le fait que** l'étrier de ressort (5) présente un corps de base (5/1) qui est relié fixement, à une extrémité, par des liaisons vissées (10) à l'élément élastique (4) et, à l'autre extrémité, soit à la pièce supérieure (6) du palier d'essieu (2), soit à la face inférieure (9) de l'extrémité du ressort à lames (1) par l'intermédiaire de liaisons vissées (11).

4. Disposition de raccordement selon une des revendications 1 à 3 mentionnées précédemment, **caractérisée par le fait que** le corps de base (5/1) de l'étrier de ressort (5) présente, pour protéger l'élément élastique (4) de sollicitations extrêmes, des butées verticales (12, 13) extérieures placées à une certaine distance par rapport à l'élément élastique, s'étendant longitudinalement et/ou transversalement par rapport au sens de marche et sur lesquelles l'élément élastique (4) peut être soutenu dans le sens horizontal.

5. Disposition de raccordement selon une des revendications 1 à 3 mentionnées précédemment, **caractérisée par le fait que** le corps de base (5/1) de l'étrier de ressort (5) présente, pour protéger l'élément élastique (4) de sollicitations extrêmes, de butées verticales (15) intérieures placées à une certaine distance par rapport aux surfaces d'appui (14) intérieures prévues côté intérieur de l'élément élastique, sur lesquelles les surfaces d'appui (14) intérieures de l'élément élastique (4) peuvent être soutenues dans le sens horizontal.

6. Disposition de raccordement selon une ou plusieurs revendications 1 à 5 mentionnées précédemment, **caractérisée par le fait que** l'élément élastique (4) est divisé par des tôles intermédiaires (16) vulcanisées et se compose au total d'une section inférieure ou supérieure (7) et au moins d'une section supplémentaire (7/1) reliée ici à la tôle intermédiaire (16).

7. Disposition de raccordement selon la revendication 6, **caractérisée par le fait que** les tôles intermédiaires (16) vulcanisées divisant l'élément élastique (4) présentent un contour de segments circulaires disposés concentriquement les uns par aux autres dont le centre commun du rayon se trouve dans un pôle de rotation des mouvements relatifs dans un plan longitudinal par rapport au sens de marche entre le ressort à lames (1/1) et l'essieu (2/1).

8. Disposition de raccordement selon une ou plusieurs revendications 1 à 7 mentionnées précédemment, **caractérisée par le fait que** l'ensemble de l'élément élastique (4) se compose du même matériau que l'élastomère de la surface d'appui (8) de la section supérieure ou inférieure (7)

9. Disposition de raccordement selon une ou plusieurs revendications 1 à 8 mentionnées précédemment, **caractérisée par le fait que** les tôles intermédiaires (16) divisant l'élément élastique (4) dépassent légèrement les sections supplémentaires (7/1, 7/2, 7/3) dans le sens horizontal.
